# EUROPEAN PATENT SPECIFICATION

(11) **EP 2 650 177 B1**
(45) Date of publication and mention of the grant of the patent: **06.07.2016**
(21) Application number: 12163598.1
(22) Date of filing: 10.04.2012
(51) Int. Cl.: B60R 21/0132

(54) **Method for triggering a motorized retractor for a safety belt system of a vehicle**
Verfahren zum Auslösen eines motorisierten Einzugs für ein Sicherheitsgurtsystem eines Fahrzeugs
Procédé de déclenchement d'un enrouleur motorisé destiné à un système de ceinture de sécurité d'un véhicule

(43) Date of publication of application: 16.10.2013
(73) Proprietor: Autoliv Development AB, 447 83 Vårgårda (SE)
(72) Inventor: Le Merrer, Yann, 75020 Paris (FR); Laoufi, Moroine, 92600 Asnières-sur-Seine (FR); Blaise, Philippe, 25490 Dampierre les Bois (FR); Charpin, Emmanuel, 25420 Voujeaucourt (FR)
(74) Representative: Müller Verweyen

(56) References cited:
- WO-A1-2006/074675
- DE-A1-102004 062 486
- DE-A1-102006 051 787
- US-B2- 7 624 833

## Description

The invention relates to a method for triggering a motorized retractor for a safety belt system of a vehicle.

Motorized retractors are used in general in safety belts of vehicle restraint systems to protect the occupant in case of accidents and/or to alert the occupant in a pre-phase of an accident or a possible dangerous situation.

The motorized retractor comprises a drive unit which is linked to a spindle onto which the safety belt is wound. When triggering the motorized retractor the drive unit, like for example an electric motor, drives the spindle in the winding direction and pulls therefore a possible belt slack out of the safety belt to tighten the safety belt closer to the occupant. As the safety belt abuts in the following closer on the occupant the restraint behavior and the load characteristic acting on the occupant can be improved. Furthermore the activation of the drive unit with tightening the safety belt can be used to warn the occupant, so that he can undertake the necessary actions to prevent the accident. The warning function can be also used to increase the attention of the driver in general when a risk situation is detected. The motorized retractor is activated in a reversible manner, which means that the safety belt is released afterwards when the risk situation is finished and no accident occurs.

Modern vehicles are nowadays provided with a complex sensor system, comprising for example an angle sensor, a pedal travel sensor, a brake pressure sensor, wheel speed sensors, acceleration sensors and a yaw rate sensor. Furthermore several sensors are provided, which are directed to the ambience of the vehicle to detect possible collisions as early as possible or to detect for example a crossing of markings on the street.

The motorized retractor is triggered in condition of one signal or in condition of a signal generated by processing several sensor signals, wherein a signal processing unit is used to generate the signal according to a specified algorithm.

From the US 7,668,633 B2 it is known to trigger the motorized retractor in condition to a braking situation. The signal for triggering the motorized retractor can be generated by various signals representing the braking situation, like pedal acceleration, brake pressure, a time gap between the actuation of the different pedals etc.

Furthermore, it is known from document WO 2006/074675 A1 that a first force level of a belt tensioner as a haptic feedback is applied to an occupant to warn him of the situation if an accident can still be avoided. If the accident cannot be avoided by braking the tension is increased to a second level to reduce slack and a third tension level is applied when the accident occurs. The belt tensioner is triggered by a signal of a radar sensor, which detects the distance and relative speed to a collision object. The driving conditions are not considered.

In view to that background it is the object of the invention to provide a method for triggering a motorized retractor which imparts an improved sense of safety to the occupant also under difficult driving conditions.

The invention suggests a method according to claim 1, wherein further advantageous embodiments of the invention are given in the subclaims.

According to the invention a method for triggering a motorized retractor for a safety belt system of a vehicle is suggested with:
- detecting a low friction road condition when
   an ABS-sensor generates a signal and a longitudinal deceleration sensor senses a deceleration which is lower than a predetermined value, or
   a brake pressure sensor detects a brake pressure, which exceeds a predetermined value and a longitudinal deceleration sensor senses a deceleration which is lower than a predetermined value, and
- triggering the motorized retractor when the low friction road condition is detected and the brake pressure sensed by a brake pressure sensor exceeds or falls below one out of three predetermined thresholds to apply one out of three different restraining forces in the safety belt system, and
- the motorized retractor is triggered to apply a first level of the restraining force when the brake pressure sensor senses a brake pressure which exceeds a first threshold for a predetermined first time interval, and
- the motorized retractor is triggered to apply a second level of the restraining force, which is higher than the first level of the restraining force when the sensed brake pressure is not falling below a second threshold within a predetermined second time interval while the first level of the restraining force is applied and wherein
- the second threshold is lower than the first threshold of the brake pressure, and
   the motorized retractor is triggered to apply a third level of the restraining force when a brake pressure is sensed which exceeds a third threshold and wherein the third level is higher than the first and the second level and the third threshold is higher than the first and the second threshold.

In a first step of the suggested method a low friction condition, or also called "LowMu" condition, is detected, which represents for example a gravel road or a slippery ground like ice, snow or rain on cobble stone pavement. This low friction condition is detected when an ABS-sensor or a brake sensor generates a signal which would result under normal conditions in a predetermined deceleration of the vehicle. Therefore the low friction condition is detected when a second condition is fulfilled, which is defined by the deceleration which is below a predetermined deceleration value. This low friction condition is a difficult driving condition and can result in excited reactions, especially when the occupant is an inexperienced driver. In a second step of the suggested method the motorized retractor is triggered to apply at least one different restraining force which imparts an improved sense of safety to the occupant. Furthermore possible belt slack is pulled out of the safety belt, so that the occupant is coupled in the following closer to the backrest of the seat.

The advantage of the suggested embodiment is that the restraining force is not increased immediately when the brake pressure exceeds the predetermined value which could result in the motorized retractor being triggered too often in a short time period. Moreover the retractor is only triggered when the brake pressure exceeds the threshold for a predetermined time, which means the occupant brakes for a longer time and not only in a short reaction. The first level of restraining force is designed to warn the driver that a low friction road condition is present. Furthermore the restraining force can warn the driver that the brake pressure is too high considering the road grip.

The second level is designed to reduce the belt slack when the brake pressure does not fall below the predetermined value in the following. The second threshold of the brake pressure is lower than the first threshold to avoid a frequent and often change of the applied restraint force within a short time period, which would result in an unstable belt force and irritate the occupant unnecessarily.

The third level is designed higher than the first and the second level and is only applied when a third threshold is exceeded. The third threshold of the brake pressure specifies a situation where the occupant actuates the brake in a panic reaction to the brake pressure exceeding the third threshold for example when the driver evaluates the situation as an unavoidable impact.

Furthermore it is suggested that the restraining force is increased in approximately equal steps from the first level to the second level and to the third level.

In the following the invention shall be illustrated on the basis of preferred embodiments with reference to the accompanying drawings, wherein:
- Fig. 1: shows a schematic signal processing of the suggested method;
- Fig. 2: shows a diagram with the brake pressure, the re-straining force levels and the LowMu condition versus the time according to the suggested method.

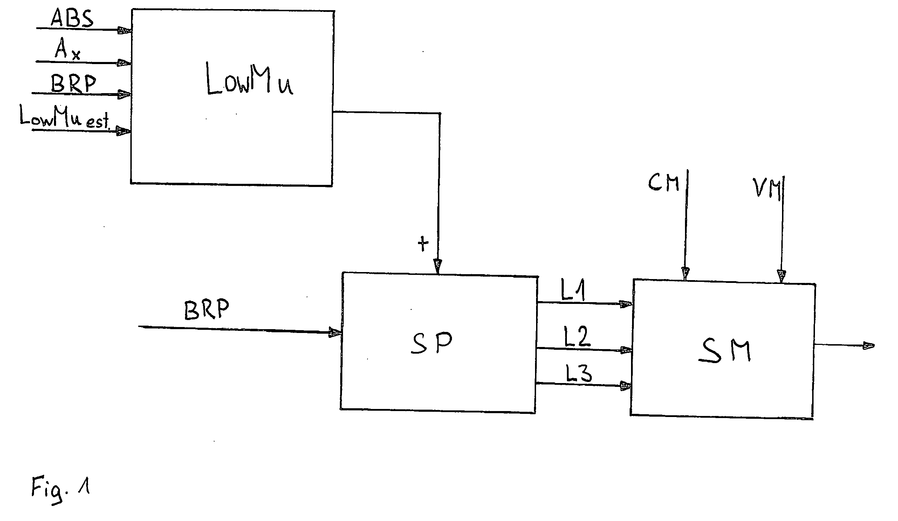

In the Figure 1 it is shown a schematic view of the signal processing unit. The safety belt system of the vehicle itself is not shown but it can be regarded as well known in the state of the art. The motorized retractor is part of the safety belt system and is used to retract the safety belt by winding the belt onto a spindle. The motorized retractor itself is provided with a drive like an electric motor which drives the spindle in winding direction when being triggered. The electric motor is a preferred drive which is easy to trigger and to adapt to the spindle of the retractor.

In Figure 1 it is shown a LowMu evaluation unit, a signal processing unit SP and a severity management unit SM.

The LowMu evaluation unit is processing the ABS signal, the signal representing the deceleration Ax in length direction of the vehicle, the signal representing the brake pressure BRP and a LowMu estimated value, which can result for example from a former processing step. All signals are preferably available on a data bus system of the vehicle, so there is no need for additional sensors to realize the suggested method.

The term LowMu is used for a low friction road condition which can result in a difficult driving situation for the vehicle where the wheels can perform at least in short time periods a slipping movement versus the road.

The LowMu condition is detected when an ABS flag is set and the deceleration Ax in length direction of the vehicle is below a predetermined value. Alternatively or additionally the LowMu condition is also detected when the brake pressure BRP exceeds a predetermined value and the length deceleration Ax is below a predetermined value. Additionally a LowMu estimated value from a former processing circuit can also be considered. The brake pressure sensor itself can be realized by a sensor sensing the pressure in the brake system or by a sensor sensing the force in the brake pedal or by a sensor sensing the brake pedal acceleration.

When the LowMu condition is detected a signal is guided to the signal processing unit SP in which the signal is processed with a signal of the brake pressure BRP according to an algorithm to trigger the motorized retractor. The brake pressure signal BRP used in the signal processing unit SP can be identical with the brake pressure signal BRP processed in the LowMu detection unit. According to the later described algorithm the motorized retractor is triggered in condition to the signal generated in the signal processing unit SP to apply different restraining force levels L1, L2 and L3 which are further guided to a severity management unit SM. In the severity management unit SM the restraining force levels L1, L2 and L3 are further processed with a curve mitigation CM and/or a velocity mitigation VM to consider further driving situations. The curve mitigation CM and/or velocity mitigation VM enable an adaption of the restraining forces to the special driving situation, when the restraining forces would be too high or too low in the special driving situation for an optimal restraining and safety sense of the occupant.

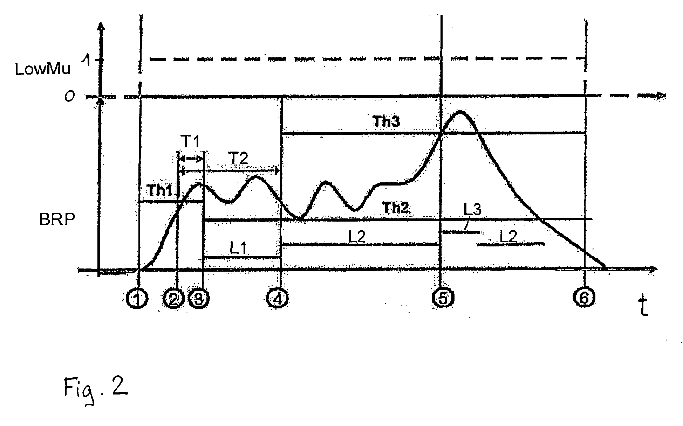

In Figure 2 it is shown the brake pressure BRP and the LowMu versus the time t in a possible critical driving situation including the generated restraining force level L. The driving situation starts at point 1 where a LowMu condition is detected and the LowMu value is set from 0 to 1, shown in the upper diagram. The brake pressure BRP increases in the following because the driver actuates the brake until a first threshold Th1 is exceeded at point 2. At point 2 a time counter is started. When the brake pressure BRP is not falling below the first threshold Th1 within a predetermined time T1, the motorized retractor is triggered to apply a first restraining force level L1. The first restraining force level L1 is dimensioned to warn the driver and to raise the attention of the driver in general. When the brake pressure does not fall below a second threshold Th2 with a second predetermined time T2 starting from point 1 the restraining force is further increased to a second level L2 after the time T2. The second threshold Th2 is lower than the first threshold Th1 of the brake pressure BRP to avoid an unnecessary often change of the restraining force within a short time, which could irritate the occupant. When the brake pressure BRP is further increased and exceeds a very high predetermined third threshold Th3 the situation is evaluated as a panic reaction where the driver does not see any chance to avoid an impact and the restraining force is further increased to a third level L3.

The second restraining force level L2 is designed to pull a possible belt slack out of the safety belt, while the third restraining force level L3 is designed to pull the occupant towards the backrest in an optimal restraining position.

When the brake pressure BRP is falling in the following below the third threshold Th3 the restraining force level is lowered again to the second level L2. Finally the restraining force level is lowered to zero when the brake pressure BRP is falling below the second threshold Th2. Alternatively, the restraining force can also be triggered when the brake pedal is released after the third threshold Th3 has been exceeded.

The restraining force levels L1, L2 and L3 might be adapted additionally in a dynamic manner in the severity management unit SM to consider special driving situations. The levels L1, L2 and L3 can be adapted for example by a curve mitigation CM or a velocity mitigation VM, where the course of the road or the speed of the vehicle are considered to increase or decrease the restraining levels L1, L2 and L3 according to a predetermined algorithm or a predetermined relation.

## Claims

1. Method for triggering a motorized retractor for a safety belt system of a vehicle with the setps of
- detecting a low friction road condition (LowMu) when an ABS-sensor generates a signal (ABS) and a longitudinal deceleration sensor senses a deceleration (Ax) which is lower than a predetermined value, or
a brake pressure sensor detects a brake pressure (BRP), which exceeds a predetermined value and a longitudinal deceleration sensor senses a deceleration (Ax) which is lower than a predetermined value, and
- triggering the motorized retractor when the low friction road condition (LowMu) is detected and the brake pressure (BRP) sensed by a brake pressure sensor exceeds or falls below one out of three predetermined thresholds (Th1, Th2, Th3) to apply one out of three different restraining forces (L1, L2, L3) in the safety belt system,
and
- the motorized retractor is triggered to apply a first level (L1) of the restraining force when the brake pressure sensor senses a brake pressure (BRP) which exceeds a first threshold (Th1) for a predetermined first time interval (T1), and
- the motorized retractor is triggered to apply a second level (L2) of the restraining force, which is higher than the first level (L1) of the restraining force when the sensed brake pressure (BRP) is not falling below a second threshold (Th2) within a predetermined second time interval (T2) while the first level (L1) of the restraining force is applied and wherein
- the second threshold (Th2) is lower than the first threshold (Th1) of the brake pressure (BRP), and
- the motorized retractor is triggered to apply a third level (L3) of the restraining force when a brake pressure (BRP) is sensed which exceeds a third threshold (Th3) and wherein
- the third level (L3) is higher than the first level (L1) and the second level (L2) and the third threshold (Th3) is higher than the first threshold (Th1) and the second threshold (Th2).

2. Method according to claim 1, wherein
- the restraining force is increased in approximately equal steps from the first level (L1) to the second level (L2) and to the third level (L3).

3. Method according to any one of the preceding claims, wherein
- the motorized retractor is triggered to apply no restraining force or a restraining force determined according to another algorithm, when the low friction condition (LowMu) is terminated.

4. Method according to any one of the preceding claims, wherein
- at least one of the restraining force levels (L1, L2, L3) is adapted in condition to the velocity and/or the curve of the actual movement of the vehicle.

## Patentansprüche

1. Verfahren zum Ansteuern eines motorisierten Gurtaufrollers für ein Sicherheitsgurtsystem eines Fahrzeugs mit folgenden Schritten
- Erfassen eines Straßenzustands mit geringer Reibung (LowMu), wenn
ein ABS-Sensor ein Signal (ABS) erzeugt und ein Längsverzögerungssensor eine Verzögerung (Ax) erfasst, die geringer ist als ein vorher festgelegter Wert, oder ein Bremsdrucksensor einen Bremsdruck (BRP) erfasst, der einen vorher festgelegten Wert übersteigt, und ein Längsverzögerungssensor eine Verzögerung (Ax) erfasst, die geringer ist als ein vorher festgelegter Wert, und
- Ansteuern des motorisierten Gurtaufrollers, wenn der Straßenzustand mit geringer Reibung (LowMu) erfasst ist und der Bremsdruck (BRP), der von einem Bremsdrucksensor erfasst wird, einen von drei vorher festgelegten Schwellenwerten (Th1, Th2, Th3) übersteigt oder unterschreitet, damit eine von drei verschiedenen Rückhaltekräften (L1, L2, L3) im Sicherheitsgurtsystem ausgeübt wird, und
- der motorisierte Gurtaufroller so angesteuert wird, dass er einen ersten Pegel (L1) der Rückhaltekraft ausübt, wenn der Bremsdrucksensor einen Bremsdruck (BRP) erfasst, der einen ersten Schwellenwert (Th1) über einen vorher festgelegten ersten Zeitraum (T1) überschreitet, und
- der motorisierte Gurtaufroller so angesteuert wird, dass er einen zweiten Pegel (L2) der Rückhaltekraft ausübt, der höher ist als der erste Pegel (L1) der Rückhaltekraft, wenn der erfasste Bremsdruck (BRP) einen zweiten Schwellenwert (Th2) innerhalb eines vorher festgelegten zweiten Zeitraums (T2) nicht unterschreitet, während der erste Pegel (L1) der Rückhaltekraft ausgeübt wird, und wobei
- der zweite Schwellenwert (Th2) niedriger ist als der erste Schwellenwert (Th1) des Bremsdrucks (BRP), und
- der motorisierte Gurtaufroller so angesteuert wird, dass er einen dritten Pegel (L3) der Rückhaltekraft ausübt, wenn ein Bremsdruck (BRP) erfasst wird, der einen dritten Schwellenwert (Th3) übersteigt, und wobei
- der dritte Pegel (L3) höher ist als der erste Pegel (L1) und der zweite Pegel (L2) und der dritte Schwellenwert (Th3) höher ist als der erste Schwellenwert (Th1) und der zweite Schwellenwert (Th2).

2. Verfahren nach Anspruch 1, wobei
- die Rückhaltekraft in ungefähr gleichen Schritten vom ersten Pegel (L1) zum zweiten Pegel (L2) und zum dritten Pegel (L3) erhöht wird.

3. Verfahren nach einem der vorhergehenden Ansprüche, wobei
- der motorisierte Gurtaufroller so angesteuert wird, dass er keine Rückhaltekraft oder eine Rückhaltekraft ausübt, die gemäß einem anderen Algorithmus bestimmt wird, wenn der Zustand mit geringer Reibung (LowMu) beendet ist.

4. Verfahren nach einem der vorhergehenden Ansprüche, wobei
- mindestens einer der Rückhaltekraftpegel (L1, L2, L3) in Abhängigkeit von der Geschwindigkeit und/oder Krümmung der tatsächlichen Bewegung des Fahrzeugs angepasst wird.

## Revendications

1. Procédé de déclenchement d'un enrouleur motorisé destiné à un système de ceinture de sécurité d'un véhicule, comprenant les étapes consistant à
- détecter un état de route à faible frottement (LowMu) quand
un capteur ABS génère un signal (ABS) et un capteur de décélération longitudinale détecte une décélération (Ax) qui est inférieure à une valeur prédéterminée, ou
un capteur de pression de freinage détecte une pression de freinage (BRP) qui dépasse une valeur prédéterminée et un capteur de décélération longitudinale détecte une décélération (Ax) qui est inférieure à une valeur prédéterminée, et
- déclencher l'enrouleur motorisé quand l'état de route à faible frottement (LowMu) est détecté et que la pression de freinage (BRP) détectée par un capteur de pression de freinage dépasse ou est inférieure à l'un de trois seuils prédéterminés (Th1, Th2, Th3) pour appliquer l'une de trois forces différentes de retenue (L1, L2, L3) dans le système de ceinture de sécurité, et
- l'enrouleur motorisé est déclenché pour appliquer un premier niveau (L1) de la force de retenue quand le capteur de pression de freinage détecte une pression de freinage (BRP) qui dépasse un premier seuil (Th1) pendant une première période de temps (T1) prédéterminée, et
- l'enrouleur motorisé est déclenché pour appliquer un deuxième niveau (L2) de la force de retenue, qui est supérieur au premier niveau (L1) de la force de retenue, quand la pression de freinage (BRP) détectée n'est pas inférieure à un deuxième seuil (Th2) pendant une deuxième période de temps (T2) prédéterminée alors que le premier niveau (L1) de la force de retenue est appliqué et dans lequel
- le deuxième seuil (Th2) est inférieur au premier seuil (Th1) de la pression de freinage (BRP), et
- l'enrouleur motorisé est déclenché pour appliquer un troisième niveau (L3) de la force de retenue quand une pression de freinage (BRP) est détectée qui dépasse un troisième seuil (Th3) et dans lequel
- le troisième niveau (L3) est supérieur au premier niveau (L1) et au deuxième niveau (L2) et le troisième seuil (Th3) est supérieur au premier seuil (Th1) et au deuxième seuil (Th2).

2. Procédé selon la revendication 1, dans lequel
- la force de retenue est augmentée par étapes approximativement égales du premier niveau (L1) au deuxième niveau (L2) et au troisième niveau (L3).

3. Procédé selon l'une quelconque des revendications précédentes, dans lequel
- l'enrouleur motorisé est déclenché pour appliquer aucune force de retenue ou une force de retenue déterminée selon un autre algorithme quand l'état de frottement faible (LowMu) est terminé.

4. Procédé selon l'une quelconque des revendications précédentes, dans lequel
- au moins l'un des niveaux de force de retenue (L1, L2, L3) est adapté en fonction de la vitesse et/ou de la courbe du mouvement réel du véhicule.
